(19) Europäisches Patentamt / European Patent Office / Office européen des brevets

(11) **EP 2 849 529 A1**

(12) **EUROPEAN PATENT APPLICATION**
published in accordance with Art. 153(4) EPC

(43) Date of publication:
**18.03.2015 Bulletin 2015/12**

(21) Application number: **13787392.3**

(22) Date of filing: **12.02.2013**

(51) Int Cl.:
***H04W 76/02*** (2009.01)

(86) International application number:
**PCT/JP2013/053235**

(87) International publication number:
**WO 2013/168443 (14.11.2013 Gazette 2013/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.05.2012 JP 2012107727**

(71) Applicant: **Hitachi, Ltd.**
**Tokyo 100-8280 (JP)**

(72) Inventor: **WATANABE Koji**
**Tokyo 100-8280 (JP)**

(74) Representative: **MERH-IP**
**Matias Erny Reichl Hoffmann**
**Paul-Heyse-Strasse 29**
**80336 München (DE)**

(54) **WIRELESS SYSTEM CONTROL DEVICE AND CONTROL METHOD**

(57)     A control unit (6) in a wireless system includes: a quality-obtaining unit that, for traffic caused by a connection request, obtains request quality (51) from a storage unit, and, for each of communication networks on a route through which the traffic caused by the connection request passes, obtains delivery quality (52) for the communication network from the storage unit; and a determining unit that, when the delivery quality (52) obtained satisfies the request quality (51) obtained, allows a connection to each of the communication networks associated with the delivery quality (52) obtained, and, when the delivery quality (52) obtained does not satisfy the request quality (51) obtained, disallows a connection to each of the communication networks associated with the delivery quality (52) obtained.

FIG. 5

**Description**

REFERENCE TO RELATED APPLICATION

This application claims the benefit of priority to Japanese Patent Application No. 2012-107727, filed on May 9, 2012, the entire contents of which are incorporated herein by reference.

TECHNICAL FIELD

The present invention relates to a wireless system control device and a wireless system control method.

BACKGROUND ART

The standards body of 3GPP (Third Generation Partnership Project) proposes a standard of LTE (Long Term Evolution) as a transition technology between the third generation mobile phone (3G) and the fourth generation mobile phone (4G). LTE specifications have been published as E-UTRAN (Evolved Universal Terrestrial Radio Access Network).
With the spread of smart phones in recent years, the number of mobile terminals connecting to a high-speed mobile network, such as an E-UTRAN network, is increasing, and traffic accommodated to the high-speed mobile network is growing. This causes shortage of network resources in the high-speed mobile network.
Then, techniques have been studied, with which part of traffic that cannot be accommodated to the high-speed mobile network is redirected (offloaded) from the high-speed mobile network to another network, such as the Internet. In SIPTO (Selected IP Traffic Offload) described in Non-Patent Document 1, as a selection method for another network, a technique is presented that selects a transfer device in another network geographically close to the base station to which a user terminal is connecting.

PRIOR ART DOCUMENTS

Non-Patent Documents

Non-Patent Document 1. 3GPP, "TS 23.401 V10.5.0" section 4.3.15 [online] [searched on September 27, 2011] Internet <URL: http://www.3gpp.org/ftp/Specs/archive/23_series/23.401/23401 -a50.zip>

SUMMARY OF THE INVENTION

Problems to be solved

When offloading the traffic in a high-speed mobile network, quality of service (QoS) provided to the traffic should be considered even in an offloaded network. Subscribers of the high-speed mobile network use communication services for the high-speed mobile network, expecting quality of service for the high-speed mobile network (for example, up to 100Mbps) to which they connect.
Therefore, the traffic flowing through the high-speed mobile network can be not only traffic that does not require high quality of service, such as a mail or a file download, but also traffic that requires a high quality of service, such as video conferencing or a game.
Here, if traffic is offloaded from the high-speed mobile network without considering a quality level of service required for the traffic, a service delivery provided for the traffic may cause a problem (e.g., a video freezes during video conferencing) to make the user feel dissatisfied with communication services.
That is, in order for a network to properly provide quality of service requested by traffic, only part of the network through which the traffic passes cannot be at a high level of quality, but the entire network (End to End) through which the traffic passes needs to be at a high level of quality. For example, even when traffic has passed through a high-speed mobile network, as a result of being offloaded from the high-speed mobile network to another network having low quality, communication quality in the offloaded network serves as a bottleneck to degrade communication quality provided to the traffic.
Then, the present invention is mainly intended to solve the problems described above, and, while reducing congestion in a wireless system, to provide appropriate quality of service for traffic passing through the wireless system.

Solution to Problems

In order to solve the above problems, the present invention is characterized to include: a storage means that, for traffic caused by a connection request for wireless communication, stores request quality which is quality of service of communication networks required for the traffic, and delivery quality which is quality of service delivered by each of the communication networks; a quality-obtaining means that, for the traffic caused by the connection request, obtains the request quality associated with the traffic from the storage means, and, for each of the communication networks on a route through which the traffic caused by the connection request passes, obtains the delivery quality for said communication network from the storage means; and a determining means that, when the delivery quality obtained satisfies the request quality obtained, allows a connection to each of the communication networks associated with the delivery quality obtained, and, when the delivery quality obtained does not satisfy the request quality obtained, disallows a connection to each of the communication networks associated with the delivery quality obtained. Other means will be described later.

Advantageous Effects of the Invention

According to the present invention, while the congestion in a wireless system is reduced, appropriate quality of service can be provided for traffic passing through the wireless system.

BRIEF DESCRIPTION OF DRAWINGS

FIGS.1A and 1B are block diagrams showing a wireless system according to an embodiment of the present invention. FIG. 1A shows a data plane and FIG. 1B shows a control plane.
FIG. 2 is a block diagram showing two types of traffic routes according to an embodiment of the present invention.
FIG.S 3A and 3B are explanatory diagrams indicating communication quality of traffic, according to an embodiment of the present invention. FIG. 3A indicate a status before offloading, and FIG. 3B indicates a status after offloading.
FIGS. 4A and 4B are block diagrams showing hardware configurations of units which constitute a wireless system according to an embodiment of the present invention. FIG. 4A shows an external transfer unit and FIG. 4B shows a control unit.
FIG. 5 is a block diagram showing a control unit according to an embodiment of the present invention.
FIGS. 6A and 6B are diagrams showing request quality data of traffic according to an embodiment of the present invention. FIG. 6A shows traffic quality data and FIG. 6B shows an acceptable quality data.
FIGS. 7A to 7C are diagrams showing delivery quality data of network according to an embodiment of the present invention. FIG. 7A shows data processed by a network quality processing unit, FIG. 7B shows data processed by an estimated quality processing unit, and FIG. 7C shows data processed by an external quality processing unit.
FIG. 8 is a flowchart showing a process of obtaining actual measured data of delivery quality according to an embodiment of the present invention.
FIG. 9 is a flowchart showing a traffic route determination process according to an embodiment of the present invention.
FIG. 10 is a flow chart showing an offloading determination process according to an embodiment of the present invention.
FIGS. 11A and 11B are explanatory diagrams showing a handover route for a normal route according to an embodiment of the present invention. FIG. 11A shows a route before a handover and FIG. 11B shows a route after the handover.
FIG. 12 is a flowchart showing a process of determining a handover route for a normal route according to an embodiment of the present invention.
FIGS. 13A and 13B are explanatory diagrams showing a handover route for offloading according to an embodiment of the present invention. FIG. 13A shows a route before a handover and FIG. 13B shows a route after the handover.
FIG. 14 is a flowchart showing a handover route determination process for offloading according to an embodiment of the present invention.

EMBODIMENTS OF THE INVENTION

Hereinafter, a description will be given in detail of an embodiment of the present invention, with reference to drawings.

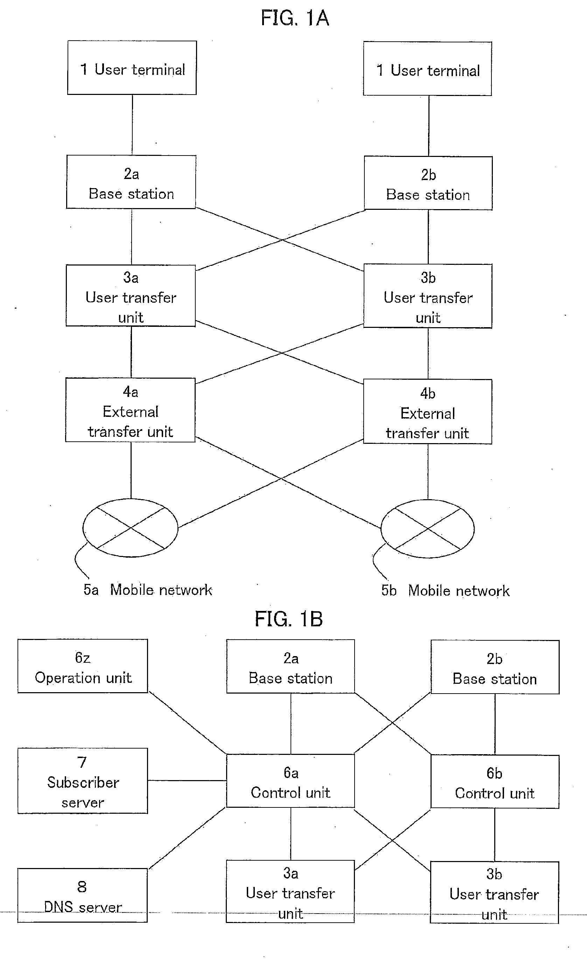

FIG. 1 is a block diagram showing a wireless system. Hereinafter, in the present embodiment, an example will be shown for a wireless system that applies an E-UTRAN by 3GPP. Therefore, E-UTRAN terms (e.g., UE, User Equipment, for a user terminal) described in Non-Patent Document 1 will be additionally used in the description. On the other hand, the wireless system according to the present embodiment may be applied to a wireless system using a standard other than the one by the 3GPP, such as a system in which a base station is provided for wireless LAN communication.

Data plane of the wireless system in FIG. 1A is configured with user terminals 1, base stations 2 (2a, 2b), user transfer units 3 (3a, 3b), external transfer units 4 (4a, 4b), and mobile networks 5 (5a, 5b), with connections as illustrated.

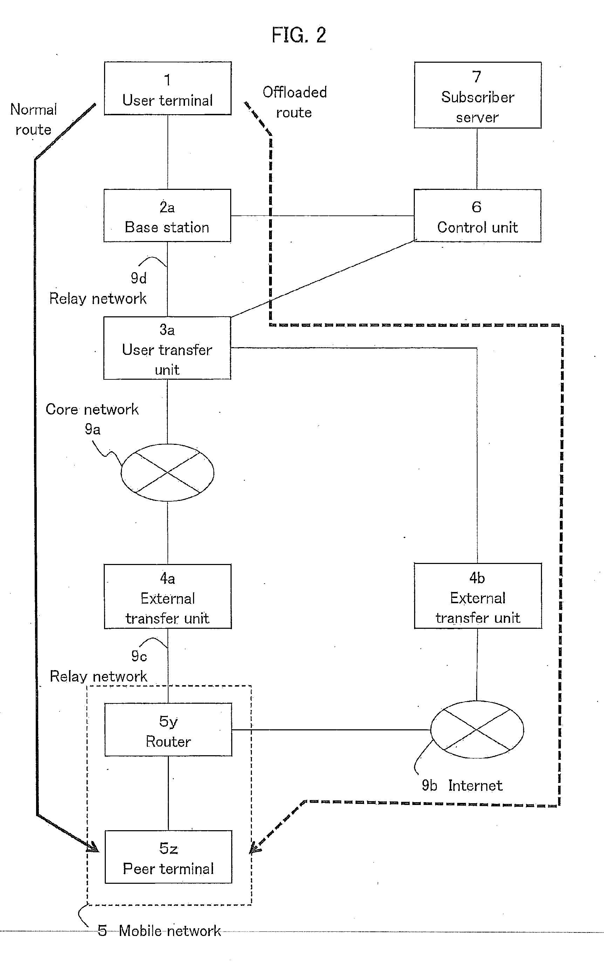

The user terminal (UE, User Equipment) 1 is a terminal as an endpoint of a connection through which traffic of user data flows, and communicates, end to end, with a peer terminal 5z as the other endpoint of the connection (see FIG. 2).

Each of the base stations (eNB, E-UTRAN Node B) 2 (2a, 2b) directly connects to the user terminal 1 to accommodate the user terminal 1. The identifier of each of the base stations 2 (2a, 2b) is, for example, TAI (Tracking Area Index), ECGI (E-UTRAN Cell Global Identifier), or the like.

The user transfer units (SGW, Serving Gateway) 3 (3a, 3b) are transfer units that handle user data, to relay traffic (such as voice calls) between the user terminals 1.

The external transfer units (PGW: PDN Gateway) 4 (4a, 4b) are gateways located at respective boundaries for connecting to the external Internet, a corporate intranet, or the like.

It should be noted that as a transfer unit (gateway) on a route of traffic between the user terminal 1 and the peer terminal 5z, not only the user transfer units 3 (3a, 3b) and the external transfer units 4 (4a, 4b), but also an LGW (Local Gateway), a BNG (Broadband Network Gateway), or the like, which is arranged between a wireless system network (e.g., Radio Access Network, Core Network) and the mobile networks 5 (5a, 5b), may be used.

The mobile networks (PDN, Packet Data Network) 5 (5a, 5b) are networks that accommodate a router 5y and the peer terminal 5z in FIG. 2.

The router (RT, Router) 5y is a router that depends on an APN (Access Point Name) which is an identifier of each of the mobile networks 5 (5a, 5b).

The peer terminal (CN, Corresponding Node) 5z is a communication partner of the user terminal 1.

A control plane of the wireless system in FIG. 1B is configured to include control units 6 (6a, 6b) connected to the data plane (base stations 2 (2a, 2b), user transfer units 3 (3a, 3b)), and an operation unit 6z, a subscriber server 7 and a DNS server 8 that are connected to the control unit 6. Note that each control unit 6 (6a, 6b) may be accommodated in the same housing with other units (the operation unit 6z, the subscriber server 7, the DNS server 8, and the like).

The control units (MME, Mobile Management Entity) 6 (6a, 6b) are access gateways that manage network controls of data plane in FIG. 1A.

The operation unit (OAM, Operation Administration and Maintenance) 6z is a unit for performing operation management and maintenance of the data plane in FIG. 1A.

The subscriber server (HSS, Home Subscriber Server) 7 manages subscription information about the mobile networks 5 (5a, 5b) to which the user terminals 1 subscribe.

The DNS (Directory Name Service) server 8 provides a service to identify an IP address (resolve name) associated with the domain name, using a domain name of FQDN (Fully Qualified Domain Name) as a search key. Therefore, the DNS server 8 is registered in advance, for an FQDN which can be inputted as a search key, with a device of the FQDN (or a set of devices on a route passing through the device).

FIG. 2 is a block diagram showing two types of routes of traffic. As a route of the traffic flowing from the user terminal 1 to the peer terminal 5z, there are two types of routes: a normal route and an offloaded route.

The normal route is a route that passes through in the order of the user terminal 1, the base station 2a, a relay network 9d, the user transfer unit 3a, a core network 9a, the external transfer unit 4a, a relay network 9c, the router 5y, and the peer terminal 5z.

The offloaded route is a route that passes through in the order of the user terminal 1, the base station 2a, the relay network 9d, the user transfer unit 3a, the external transfer unit 4b, an Internet 9b, the router 5y, and the peer terminal 5z.

The relay network 9c is, for example, a network where a VLAN (Virtual Local Area Network) connection is established between the external transfer unit 4a and the router 5y, and for establishing this, the external transfer unit 4a holds IP address information of the router 5y. Note that as the relay network 9c, a network, which is run by a provider different from the provider of the core network 9a, may be routed.

The relay network 9d is, for example, a RAN (Radio Access Network).

According with an increase of traffic to the core network 9a and /or the relay network 9c, the user transfer unit 3a can redirect part of the traffic flowing through the normal route to the offloaded route, to reduce congestion in the core network 9a and/or the relay network 9c. However, simply redirecting any traffic to the offloaded route without qualification may be able to achieve reducing congestion, but as an adverse effect, traffic such as video conferencing that requires high quality may be sometimes interrupted due to low quality of the offloaded route.

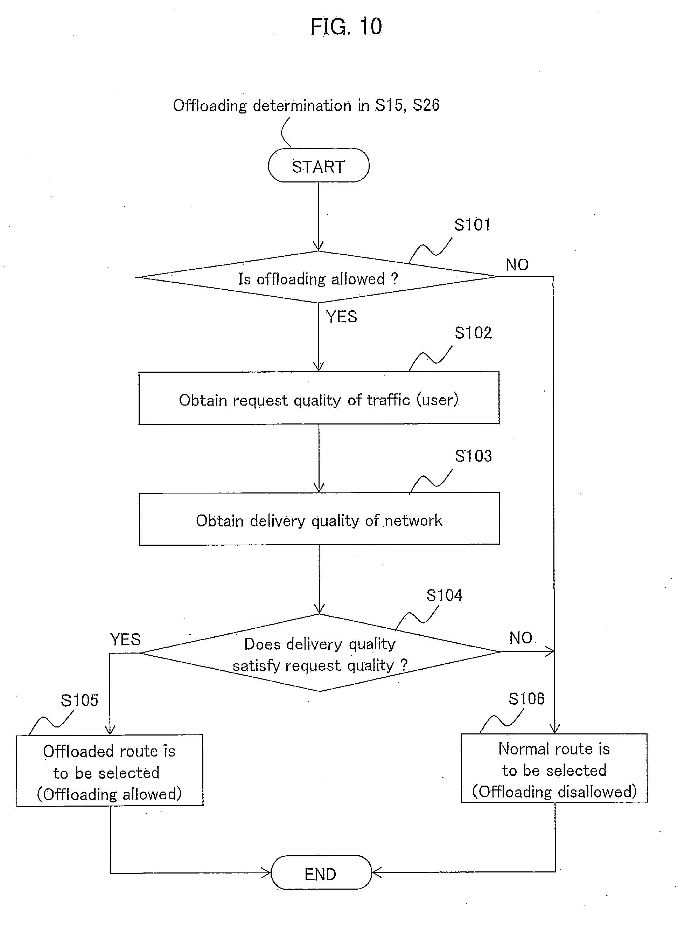

Therefore, the control device 6 determines, for each traffic flowing through the normal route, whether or not to allow the traffic being offloaded to the offloaded route (hereinafter, offloading determination) (details of the determination process will be described later in FIG. 10 etc.). This allows mail traffic or the like, which can flow without a problem even on the offloaded route, to be offloaded, and disallows traffic such as video conferencing to be offloaded, to suppress the aforesaid adverse effect.

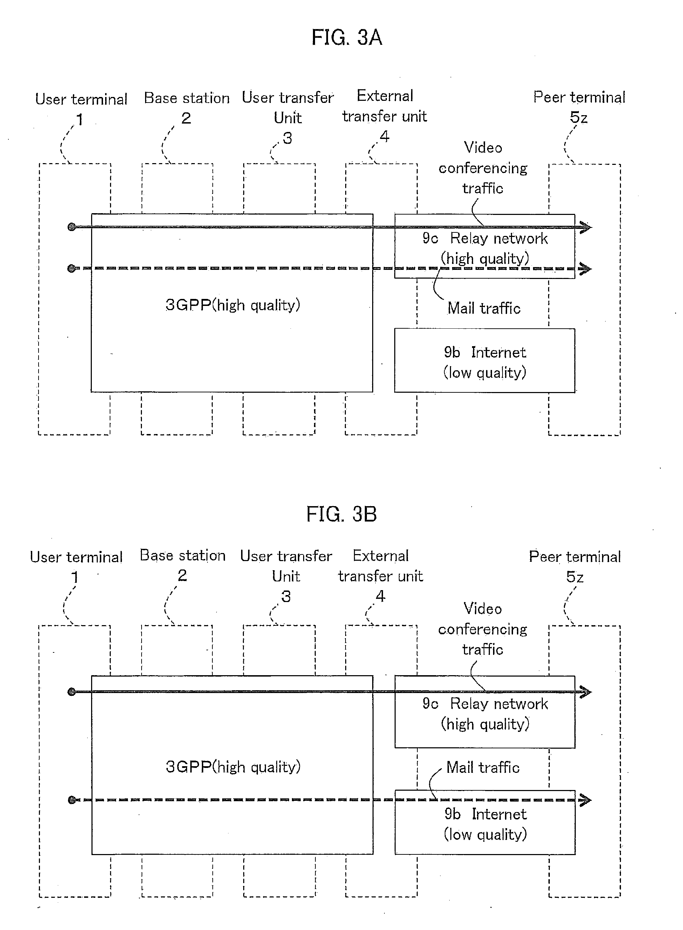

FIGS. 3A and 3B are explanatory diagrams indicating communication quality of traffic. These indicate quality of service guaranteed for each route through which the traffic passes from the user terminal 1 to the peer terminal 5z.

FIG. 3A indicates a state of mail traffic before offloading. Traffic of video conferencing and mail traffic pass through the normal routes in FIG. 2, respectively.

As flowing through the normal route, traffic of video conferencing can receive, from the user terminal 1 to the external transfer unit 4, a high-quality service provided with the E-UTRAN by 3GPPand further receive, from the external transfer unit 4 to the peer terminal 5z, a high-quality service provided by the provider of the relay network 9c. That is, traffic of video conferencing can receive a high-quality service, end to end, to allow the video conferencing to be serviced smoothly.

Mail traffic can also receive a high-quality service, end to end, as well as the traffic of video conferencing. However, as the relay network 9c is congested, part of the traffic flowing through the normal route needs to be offloaded to the offloaded route.

FIG. 3B indicates a state of the mail traffic after offloading. The traffic of video conferencing passes through the normal route in FIG. 2, and the mail traffic is offloaded so as to pass through the offloaded route in FIG. 2. Considering the communication quality required for each traffic, the control unit 6 disallows the traffic of video conferencing to be offloaded, and allows the mail traffic to be offloaded.

The mail traffic passes through the Internet 9b, to which the mail traffic is offloaded, to cause end-to-end communication quality degraded. However, since the user does not suffer inconvenience so much even if a mail arrives late by the unit of several seconds, the user can be kept free from suffering inconvenience.

The traffic of video conferencing is exempted from offloading to continuously receive a high-quality service, end to end.

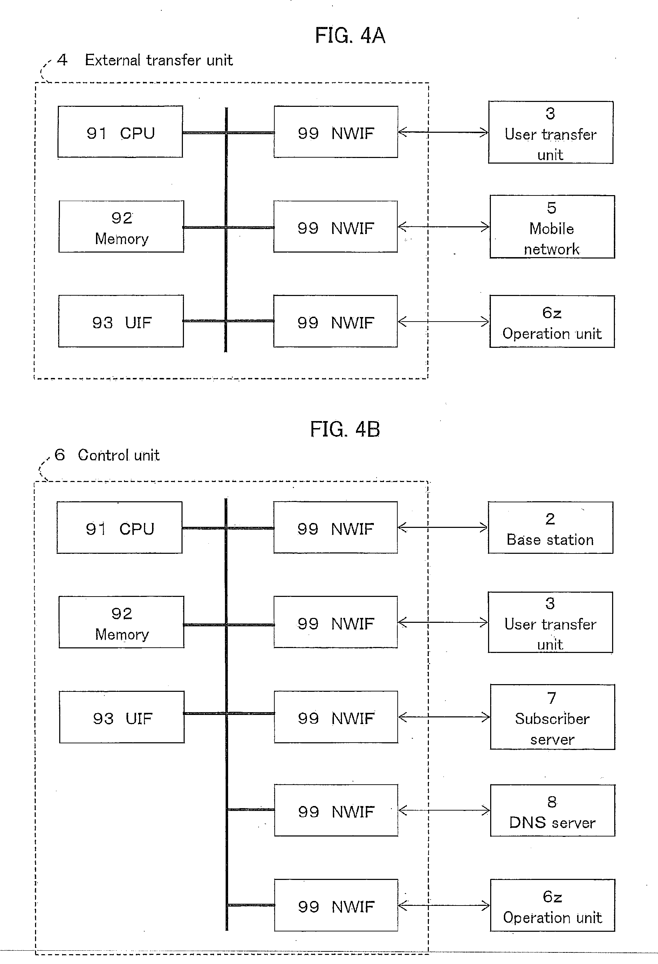

FIGS. 4A and 4B are block diagrams showing hardware configurations of units that constitute the wireless system. In FIGS. 4A and 4B, the external transfer unit 4 and the control unit 6 are illustrated, and other devices in the wireless system also have similar hardware configurations.

Each unit in the wireless system is configured as a computer having a CPU (Central Processing Unit) 91, a memory 92, a UIF (User Interface) 93, and an NWIF (NetWork Interface) 99.

The CPU91 executes a program retrieved from the memory 92 for configuring each processing unit.

The memory 92 stores, along with the program for each processing unit, data used by each processing unit.

The UIF 93 is an interface for connecting input and output devices (keyboard, mouse, display, and the like) for inputting and outputting each data stored in the memory 92.

The NWIF 99 is an interface for relaying data to be exchanged with other units.

In the external transfer unit in FIG. 4A, the user transfer unit 3, the mobile network 5 (routers 5y), and the operation unit 6z are shown as an example of those connected from the NWIF 99.

In the control unit 6 in FIG. 4B, the base station 2, the user transfer unit 3, the subscriber server 7, the DNS server 8, and the operation unit 6z are shown as an example of those connected from the NWIF99.

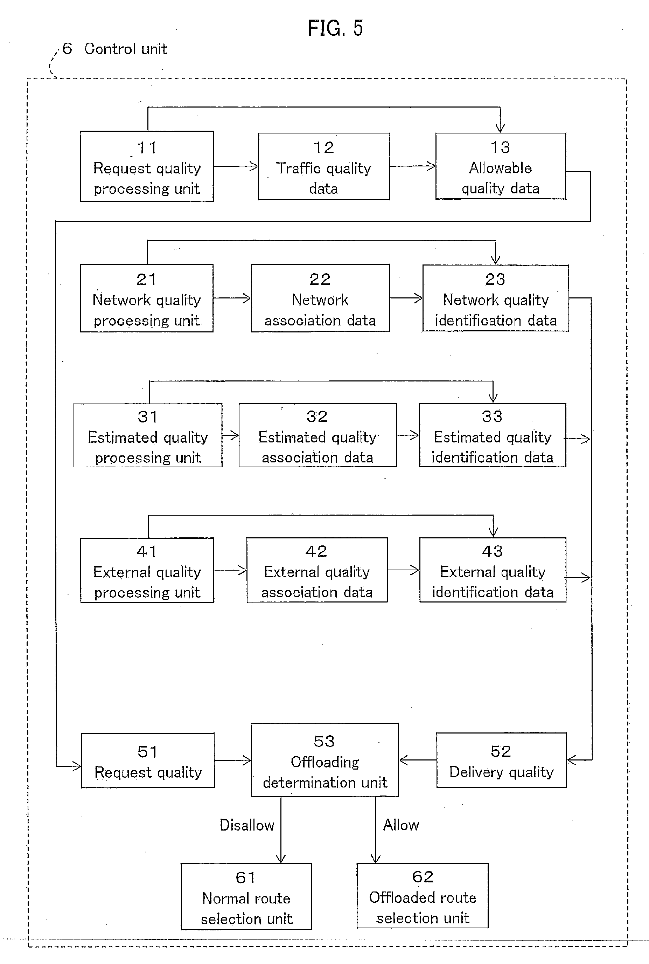

FIG. 5 is a block diagram showing the control unit 6. As described in FIGS. 2, 3A and 3B, the control unit 6 is configured to allow traffic to pass through a transfer unit which is selected, depending on the result of the offloading determination by an offloading determination unit 53, either by a normal route selection unit 61 that selects a transfer unit through which the normal route is established, or an offloaded route selection unit 62 that selects a transfer unit through which the offloaded route is established.

The normal route selection unit 61 can be implemented, for example, by a technique described in Non-Patent Document "TS 29.303" at section 5.3 "Procedures for Discovering and Selecting a PGW and SGW".

The offloaded route selection unit 62 can be implemented, for example, by a technique described in Non-Patent Document "TS 29.303" at section 5.6 "GW Selection for SIPTO".

Non-Patent Document "TS 29.303" can be obtained online as "3GPP TS 29.303 V11.0.0", as searched on April 5, 2012, from the Internet <URL: http://www.3gpp.org/ftp/Specs/archive/29_series/29.303/29303-b00.zip>.

Note that the main difference between the normal route selection unit 61 and the offloaded route selection unit 62 is an input parameter (FQDN) to the DNS server 8 which both selectors call.

The FQDN of the offloaded route selection unit 62 includes identification information (e.g., identification information of devices that are geographically closer to the base station 2 to which the user terminal 1 connects) of devices (base station 2, transfer unit etc.) through which the offloaded route is established. Here, for loadbalancing purpose, the offloaded route selection unit 62 may randomly select devices from candidate devices through which the route can be established.

The FQDN of the normal route selection unit 61 does not include identification information of devices through which the normal route is established, and the default transfer unit is selected by the DNS server 8.

Hereinafter, a description will be given in detail of the components used for offloading determination in the offloading determination unit 53. The offloading determination unit 53 allows offloading when delivery quality 52 of the network is greater than request quality 51 of the traffic, and disallows offloading when the delivery quality 52 is less than the request quality 51.

Note that when the request quality 51 of the traffic and the delivery quality 52 of the network are equal, offloading may be either allowed or disallowed.

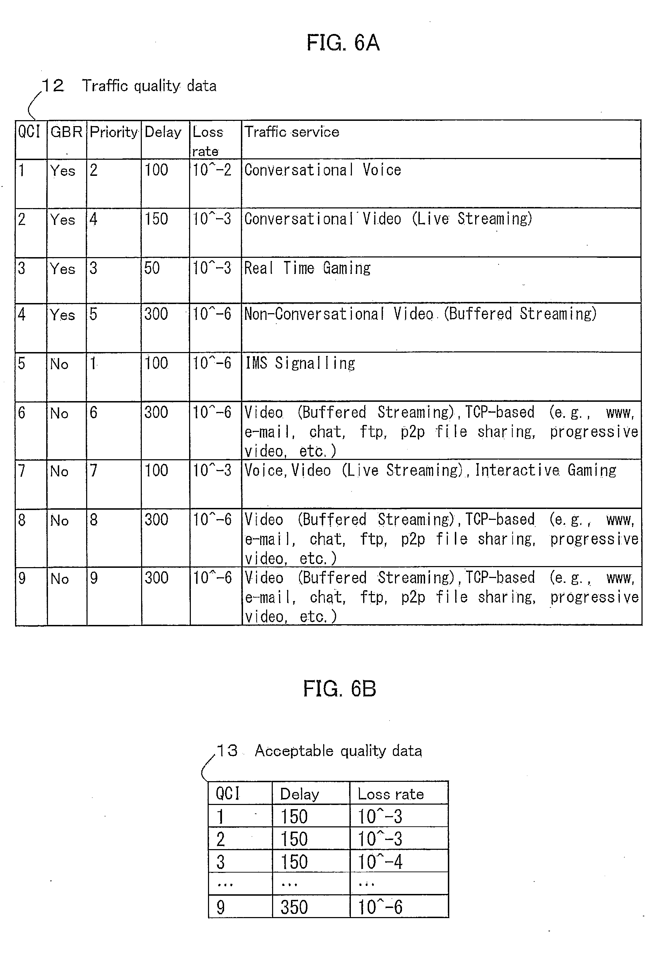

First, in order to obtain the request quality 51, the control device 6 includes a request quality processing unit 11, traffic quality data 12, and allowable quality data 13 (see FIGS. 6A and 6B for details).

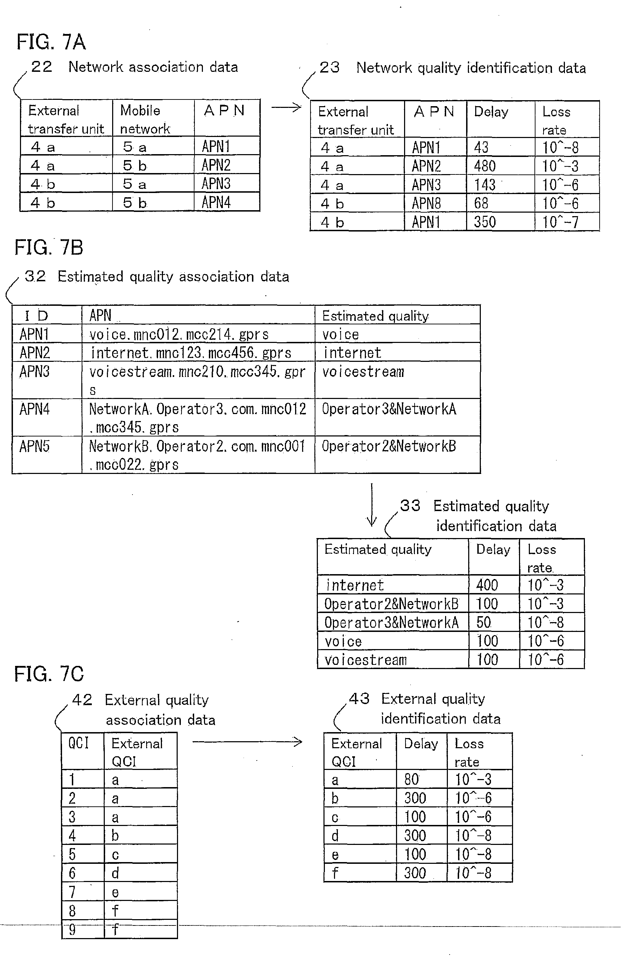

Next, in order to obtain the delivery quality 52, the control device 6 includes a network quality processing unit 21, a network association data 22, network quality determination data 23, estimated quality processing unit 31, estimated quality association data 32, estimated quality determination data 33, an external quality processing unit 41, external quality association data 42, and external quality determination data 43 (see FIGS. 7A-7C for details).

FIGS. 6A and 6B are block diagrams showing the request quality data of traffic. FIG. 6A shows, as traffic quality data 12, an example using the data shown in "Table 6.1.7: Standardized QCI characteristics" in 3GPP TS 23.203. The 3GPP TS 23.203 can be obtained online as "3GPP TS 23.203 V11.5.0", as searched on April 5, 2012, from the Internet <URL: http://www.3gpp.org/ftp/Specs/archive/23_series/23.203/23203-b50.zip>.

The traffic quality data 12 is constructed, for each QCI (QoS Class Identifier) that is information to identify quality of service, in association with information indicating whether or not the QCI has a guaranteed bit rate (GBR), the priority of the QCI, specific parameters of quality of service requested by traffic (delay (Packet Delay), loss rate (Packet EL Rate)), and specific information of traffic service(s) that apply(ies) the QCI.

It should be noted, as an example of parameters of quality of service, the delay and the loss rate are listed, but the policy, such as which one of these two should be used and which one should be given priority, may be inputted in advance by a provider of a wireless system. Further, as parameters of quality of service, parameters other than the delay and the loss rate (such as bandwidth) may be used alone or in combination with the two parameters.

The acceptable quality data 13 in FIG. 6B shows quality of service which the user requests from (allows) an offloaded network. The acceptable quality data 13 is associated, for each QCI, with parameters (delay, loss rate) of quality of service. It should be noted that the acceptable quality data 13 is desirable to be created for each user or a user group having the same attribute (such as contracts with the same fee structure).

The offloading determination unit 53 uses, as the request quality 51 used for offloading determination, parameters of quality of service for identification, based on at least one parameter among the parameters of quality of service in the traffic quality data 12 and the parameters of quality of service in the acceptable quality data 13.

For example, the request quality 51 may be a parameter of quality of service in the acceptable quality data 13, or may be a result of a specific operation (minimum value operation, average value operation) inputted with a parameter of quality of service in the traffic quality data 12 and a parameter of quality of service in the acceptable quality data 13.

In addition, an interval subject to the parameter(s) of quality of service, which is/are defined in the traffic quality data 12 and/or the acceptable quality data 13, may be a route from the external transfer unit 4 to the mobile network 5, or may be a route from a device other than the external transfer unit 4 (such as the base station 2) to the mobile network 5.

Further, the parameter(s) of quality of service may be the maximum value requested (allowed), or may be an average value.

FIGS. 7A-7C are diagrams showing delivery quality data of network. The offloading determination unit 53 uses, as the delivery quality 52 used for offloading determination, parameters of quality of service for identification, based on at least one parameter among parameters of quality of service, which are defined with respective identification data of quality (network quality identification data 23, estimated quality identification data 33, external quality identification data 43).

FIG. 7A shows network association data 22 and the network quality identification data 23 processed by the network quality processing unit 21.

The network association data 22 is data, for each external transfer unit 4, associating a mobile network 5 to be connected to the external transfer unit 4 with the APN of the mobile network 5, and is notified from the operation unit 6z. For example, the first line of the network association data 22 indicates that a mobile network 5a is connected to an external transfer unit 4a, and the mobile network 5a is associated with a name "APN1".

The network quality identification data 23 is data that for each APN of the mobile network 5 connected (offloaded) from the external transfer unit 4, defines the parameters (delay, loss rate) of quality of service provided by the mobile network 5.

The network quality processing unit 21 uses one of a first to third settings as exemplified below to set parameters of quality of service in the network quality identification data 23. Note that data in the network association data 22 and data other than those of quality of service in the network quality identification data 23 are, as they are network configuration data, inputted in advance by the administrator or the like.

Hereinafter, a description will be given of each setting in conjunction with a cost of acquisition of the configuration data and accuracy of data. For example, (the control unit 6 of) a provider of inexpensive communication services may arrange quality identification data, having a lower cost of data acquisition but lower accuracy of data, while (the control unit 6 of) a provider of expensive communication services may arrange quality identification data, having a higher cost of data acquisition but higher accuracy of data.

The first setting is to input by an administrator a representative value of quality of service to be used in common to all the APNs. Since only inputting a single parameter is required, this setting is superior in terms of a cost of data acquisition. Further, time and effort may be reduced in obtaining actual quality of service to allow the offloading determination of the present embodiment to be widely implemented, even when an offloaded network is managed in a different mode (another company, another country, or the like).

The second setting is to input by an administrator values of quality of service for each APN. The administrator inputs values of quality of service for each APN, based on the knowledge obtained by referring to specifications in an equipment catalog, or the like. This setting balances between a cost of data acquisition and accuracy of data.

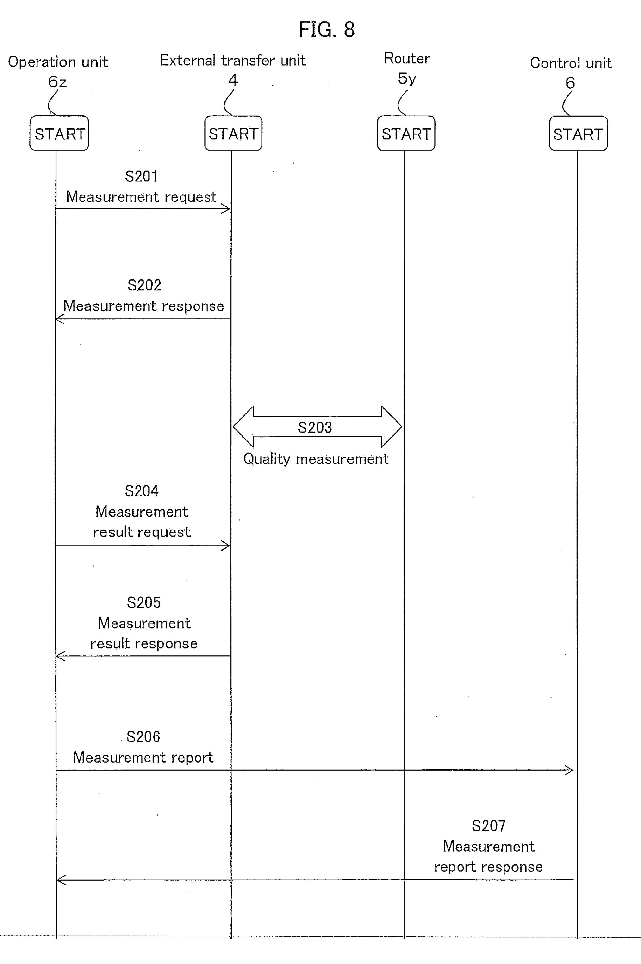

The third setting is to receive and set actual measured data of values of quality of service (see FIG. 8 for details) for each APN from the operation unit 6z. A cost of data acquisition is high but accuracy of data is superior, therefore disadvantages can be reduced such that even with quality of service being poor in practice in an offloaded network, the gateway is wrongly selected for offloading.

FIG. 7B shows estimated quality association data 32 and estimated quality identification data 33 processed by the estimated quality processing unit 31.

The estimated quality association data 32 is data that, for each APN identified by an ID, associates a character string of the APN with a word indicating estimated quality identified from the character string. The word indicating the estimated quality is, for example, a word included in the character string of the APN. The word indicating the estimated quality is, for example, a character string representing a type of network, such as "internet", a character string representing a type of service, such as "voice", or the like.

The estimated quality association data 32 is data that, for each word that indicates estimated quality, defines parameters (delay, loss rate) of its quality of service.

The estimated quality processing unit 31, from an APN of the mobile network 5 included on the offloaded route of traffic, identifies the word indicating the estimated quality of the APN with reference to the estimated quality association data 32, and then obtains quality of service associated with the estimated quality with reference to the estimated quality identification data 33. Therefore, the estimated quality processing unit 31 receives and registers input of data contents in the estimated quality association data 32 and the estimated quality identification data 33 in advance from the administrator.

For example, when an APN on the offloaded route of traffic is APN1 = "voice.mnc012.mcc214.gprs," the estimated quality processing unit 31 refers to the estimated quality association data 32 to set the estimated quality to "voice", since the APN1 includes a character of "voice." Then, referring to the line having the estimated quality of "voice" in the estimated quality identification data 33, the estimated quality processing unit 31 estimates that quality of service of the APN1 is "delay = 100ms, loss rate = $10^{-6}$."

FIG. 7C shows an external quality association data 42 and an external quality identification data 43 processed by the external quality processing unit 41.

The external quality association data 42 is data that associates a QCI (left column) indicating quality of service of an offloading network with an external QCI (External Network QoS Index) indicating quality of service of an offloaded network. Note that a DSCP (DiffServ Code Point) value associated with the external QCI is added to packets flowing through the offloaded network.

The external quality identification data 43 is data that, for each external QCI, defines parameters (delay, loss rate) of its quality of service. Each of these parameters may be an upper limit value of quality, or may be an average value.

Here, the offloading network is, for example, each of "3GPP" networks in FIG. 3A, and the offloaded network is, for example, the relay network 9c or the Internet 9b in FIG. 3B.

The external quality processing unit 41, based on the QCI ("1", or the like) of traffic identified from the traffic quality data 12, identifies an associated external QCI ("a", or the like) from the external quality association data 42, and then, from the identified external QCI, obtains parameters (delay of "80," and loss rate of "$10^{-3}$," or the like) of quality of service with reference to the external quality identification data 43.

Thus, each quality of service corresponds to one another even between different networks, then it can be expected that quality of service of the offloaded network is equivalent to quality of service of the offloading network, which allows gaining highly accurate delivery quality 52.

FIG. 8 is a flowchart showing a process of obtaining actual measured data of delivery quality.

In S201, the operation unit 6z transmits to the external transfer unit 4 a measurement request (QoS Measurement Req) which is a command that requests information about quality of service.

In S202, the external transfer unit 4, as a response to the measurement request in S201, sends a measurement response (QoS Measurement Res) to the operation unit 6z.

In S203, the external transfer unit 4, for the measurement request in S201 performs quality measurement (QoS Measurement) with the mobile network 5 (router 5y). The quality measurement means, for example, to execute a ping command for the measurement, based on measurement messages (echo request message, echo reply message) transmitted and received between the external transfer unit 4 and the mobile network 5.

Delay of actual measured data is a result of the division by 2 of an average time since an echo request message is transmitted until an echo reply message is received.

Loss rate of the actual measured data is calculated as (number of echo request messages that have not received echo reply messages) / (total number of echo request messages transmitted).

Setting values of the measurement (address of respective nodes for transmitting and receiving measurement messages, number of echo request messages to transmit, and the like) may be set remotely from other device (operation unit 6z, control unit 6, or the like), or may be set locally from an input means connected to the unit itself.

In S204, the operation unit 6z transmits to the external transfer unit 4 a measurement result request (QoS Information Req) which is a command that requests information about quality of service measured in S203.

In S205, the external transfer unit 4 transmits to the operation unit 6z a measurement result response (QoS Information Res) that includes the information about quality of service measured in S203.

In S206, the operation unit 6z transmits to the control unit 6 a measurement report (QoS InfoInsert Req) that includes the information about quality of service measured which is obtained in S205.

In S207, the control device 6 returns a measurement report response (QoS InfoInsert Res).

The respective processings in S201 to S207 described above may be executed not only in the sequence shown as an example in FIG. 8 but also in sequences variously modified.

For example, since quality of service is the data that varies as time passes, a measurement request in S201 may be transmitted repeatedly at predetermined time intervals to allow information about most recent quality of service to be measured multiple times.

In addition, respective response messages in S202, S205, S207 may be omitted to proceed to the next process after waiting a predetermined time, without waiting for the arrival of those response messages.

Further, the external transfer unit 4 may skip the respective message processing in S202, S203 and, in response to a measurement request in S201, transmit the measurement result response in S205.

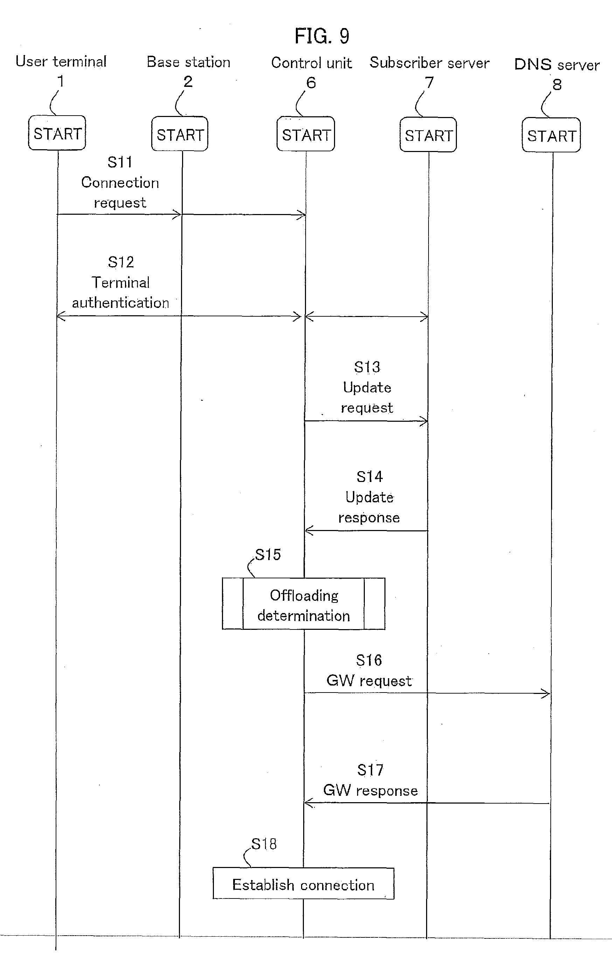

FIG. 9 is a flowchart showing a traffic route determination process.

In S11, the user terminal 1 transmits a connection request (Attach Request), which includes the ID of the base station 2 geographically close to itself, to the base station 2 to be connected. The base station 2 notifies the control unit 6 of the ID of the user terminal 1 and the ID of the base station 2.

In S12, the control unit 6 performs terminal authentication (Authentication) for the user terminal 1 in S11. To do that, the control unit 6 obtains authentication data of the user terminal 1 from the subscriber server 7.

In S13, the control unit 6 transmits an update request (ULR, Update Location Request) of updating the connection position of the user terminal 1 to the subscriber server 7.

In S14, in response to S13, the subscriber server 7 transmits an update response (ULA, Update Location Ack), which includes subscriber data (Subscriber data), to the control device 6. The update response includes: the APN that indicates the mobile network 5 which the user of the user terminal 1 subscribes to (can use); information whether or not SIPTO offloading is allowed for the APN (SIPTO allowed); and the QCI provided by the mobile network 5 of the APN.

In S15, the offloading determination unit 53 in the control unit 6 performs offloading determination (see FIG. 10 for details).

In S16, based on the results of the offloading determination in S15, the control unit 6 transmits to the DNS server 8 a GW request of requesting a transfer unit (GW) on the route the traffic, for which a connection request has been made in S11, passes through.

Note that when offloading is allowed in S15, FQDNs included in the GW request in S16 are the default APN obtained in S14 as well as the APN of the base station 2 included in the connection request in S11.

On the other hand, when offloading is disallowed in S15, the GW request in S16 does not specify a particular device (specifies the default APN obtained in S14 as an FQDN).

In S17, the DNS server 8, in response to the GW request in S16, transmits a GW response to the control unit 6. The GW response includes an IP address of the transfer unit (user transfer unit 3, external transfer unit 4) associated with the FQDNs included in the GW request in S16.

In S18, the control unit 6, for each transfer unit specified in the GW response in S17, instructs connection establishment (Connection establishment) of the route the traffic of the user data passes through. In this connection establishment, quality of service is applied that is indicated by the QCI included in the update response in S14. For details of the connection establishment that specifies the QCI, Section 5.3.2.1 in Non-Patent Document 1 may be referred to, for example.

FIG. 10 is a flowchart showing an offloading determination process.

In S101, the offloading determination unit 53, based on the "SIPTO allowed" in the update response obtained in S14, determines whether or not the user terminal 1 in S11 is allowed to use offloaded routes. If the result is YES (allowed) in S101, the process proceeds to S102 in order to perform offloading determination. If the result is NO (disallowed) in S101, the process proceeds to S106 without referring to quality of service at all to perform the offloading determination, because any offloaded route is not available.

In S102, the offloading determination unit 53 (quality-obtaining means) obtains the request quality 51 of the traffic (user), as described in the traffic quality data 12 in FIG. 6A and the acceptable quality data 13 in FIG. 6B.

In S103, the offloading determination unit 53 (quality-obtaining means) obtains the delivery quality 52 of the network, as described in the network quality identification data 23, the estimated quality identification data 33, and the external quality identification data 43 in FIGS. 7A-7C, respectively.

Here, in order to guarantee quality of service, end to end, it is desirable, as the delivery quality 52 for the traffic passing through multiple networks (a first network, a second network, a third network, ---), to calculate values indicating quality of service, end to end, as exemplified below.

$$\text{Delivery quality 52 (delay)} = (\text{Delay value in the first network}) + (\text{Delay value in the second network}) + (\text{Delay value in the third network}) + \cdots$$

$$\text{Delivery quality 52 (loss rate)} = 1 - (\text{Transfer success rate in the first network}) \times (\text{Transfer success rate in the second network}) \times (\text{Transfer success rate in the third network}) \times \cdots, \text{ where Transfer success rate} = (1 - \text{Loss rate of the network}).$$

Delivery quality 52 (bandwidth) = MIN ((bandwidth of the first network), (bandwidth of the second network), (bandwidth of the third network), ---), where MIN is a function to calculate the minimum value among multiple arguments.

In S104, the offloading determination unit 53 determines whether the delivery quality in S103 satisfies the request quality in S102 to perform offloading determination. When it meets this determination criteria (YES at S104), offloading is allowed and the process proceeds to S105. When it does not meet this determination criteria (NO at S104), offloading is disallowed and the process proceeds to S106.

For example, when the delivery quality 52 (Delay column in the network quality identification data 23) in S103 is "Delay = 150ms," offloading is allowed for each traffic service having the request quality 51 of "Delay $\geq$ 150ms" in S102 (QCIs 1, 2, 3, 5, 7 are applicable in the traffic quality data 12).

Or when the delivery quality 52 (Loss rate column in the network quality identification data 23) in S103 is "Loss rate = 10 ^ -6," offloading is allowed for each traffic service having the request quality 51 of "Loss rate $\geq$ 10^-6" in S102 (QCIs 4, 5, 6, 8, 9 are applicable in the traffic quality data 12).

In S105, the offloaded route selection unit 62 determines (allow offloading) that the offloaded route will be the route the traffic passes through.

In S106, the normal route selection unit 61 determines (disallow offloading) that the normal route will be the route the traffic passes through. Note that, as described in FIG. 9, the determination result in S105 or S106 is reflected to the FQDN included in the GW request in S16.

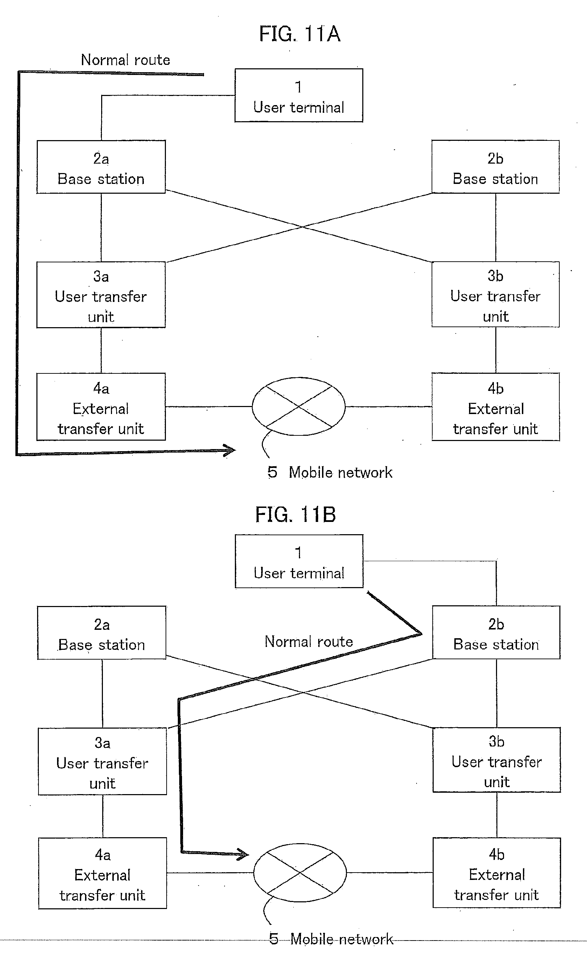

With the processes described hereinabove using FIGS. 1A-10, a connection is established that corresponds to quality of service each traffic requests, end to end, from the user terminal 1 to the peer terminal 5z. In the description hereinafter using FIGS. 11A-14, a description will be given of an example in which, after the connection is established, a base station 2 (2a, 2b) that accommodates the user terminal 1 is switched (handed over) to another.

FIGS. 11A and 11B are explanatory diagrams showing a handover route of the traffic flowing through the normal route. The user terminal 1 will hand over the connection from the base station 2a to the base station 2b.

In a state before the handover in FIG. 11A, the normal route for flowing the traffic passes through the user terminal 1, the base station 2a, the user transfer unit 3a, the external transfer unit 4a, the mobile network 5 in this order.

In a state after the handover in FIG. 11B, the normal route for flowing the traffic passes through the user terminal 1, the base station 2b, the user transfer unit 3a, the external transfer unit 4a, the mobile network 5 in this order.

Therefore, with the handover, the normal route on the upstream side (the user terminal 1, the base station 2 (2a, 2b), the user transfer unit 3 (3a, 3b)) is changed, but the normal route on the downstream side (user transfer unit 3 (3a, 3b), the external transfer unit 4 (4a, 4b), the mobile network 5) is unchanged. In other words, GWs of transfer units on the downstream side (user transfer unit 3 (3a, 3b), external transfer unit 4 (4a, 4b)) are reselected (GW relocation) with the handover.

That is, the control unit 6 needs to change the connection of the normal route on the upstream side to a new route after the handover, but can take over the state before the handover, as is, for the connection of the normal route on the downstream side, without disconnecting the old connection and establishing a new connection. This can suppress service interruption due to disconnection of the connection.

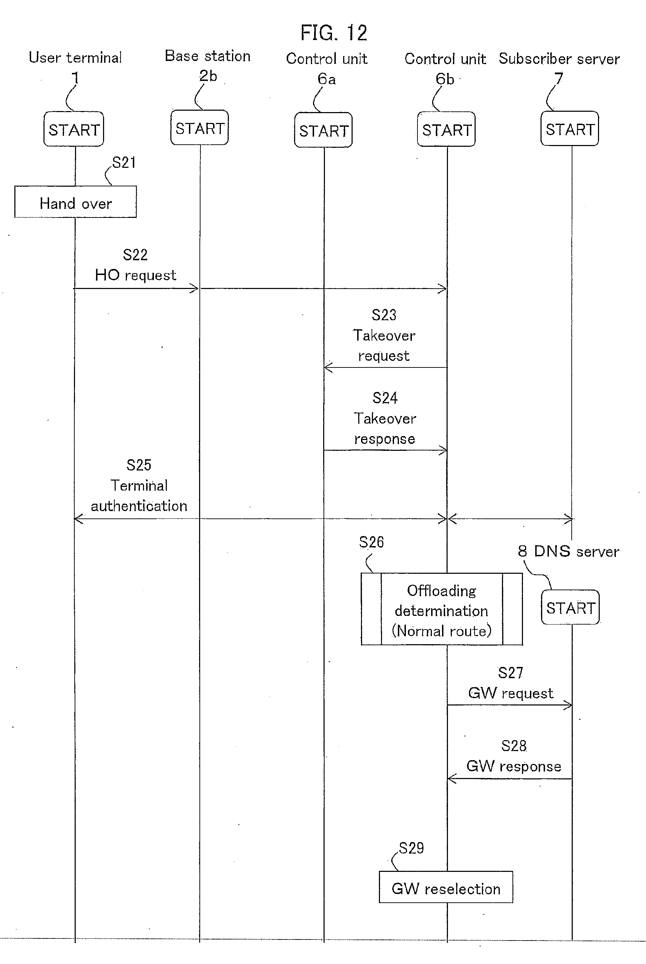

FIG. 12 is a flowchart showing a process of determining a handover route for the normal route in FIG. 11A.

In S21, the user terminal 1 starts an update of position information (TAU, Tracking Area Update) associated with the handover (HO, Hand Over).

In S22, the user terminal 1 transmits a HO request (Tracking Area Update request) in S21 to the base station 2b of the handover destination. The base station 2b notifies the control device 6b of the HO request in S22. Hereinafter, the control unit 6b receiving the notification, in order to newly perform mobility management of the user terminal 1, takes over the information about the user terminal 1 from the control unit 6a, which has been performing the mobility management before the handover.

In S23, the control unit 6b of the takeover destination transmits a takeover request (context request) for requesting information required for the connection of the user terminal 1 (S18) to the control unit 6a of the takeover source.

In S24, the control unit 6a, in response to the request in S23, transmits to the control unit 6b a takeover response (context response) inclusive of the connection information. This connection information, in addition to the update response (APN, SIPTO allowed, QCI) in S14, includes the GW response (IP address of the transfer unit) in S17.

In S25, terminal authentication (Authentication) is performed in the same way as in S12.

In S26, offloading determination is performed in the same way as in S12, and as a result, offloading may be disallowed (normal route is selected).

S27 and S28 are the name resolution process (GW request, GW response) by the DNS server 8 in the same way as S16, S17.

In S29, the control unit 6b performs GW reselection (GW relocation), as described in FIG. 11B.

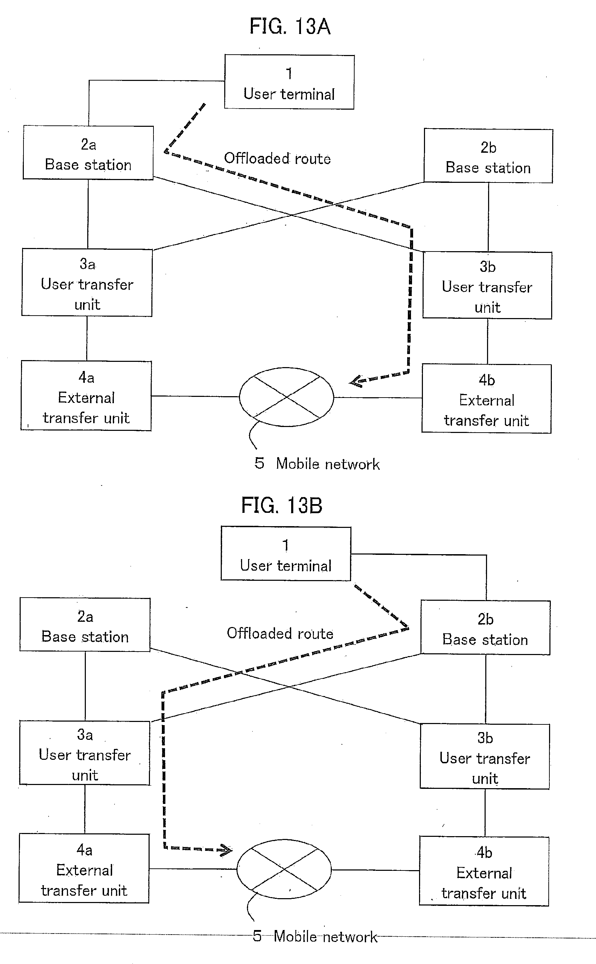

FIGS. 13A and 13B are explanatory diagrams showing a handover route of the traffic flowing through the offloaded route. As in FIGS. 11A and 11B, the user terminal 1 will hand over the connection from the base station 2a to the base station 2b. Here, according to a transition from the state before the handover in FIG. 13A to a state after the handover in FIG. 13B, transfer units (user transfer unit 3 (3a, 3b), external transfer unit 4 (4a, 4b)) the offloaded route passing through are changed.

Therefore, unlike FIGS. 11A and 11B, GW reselection cannot be performed, and then the connection of the offloaded route needs to be changed end to end.

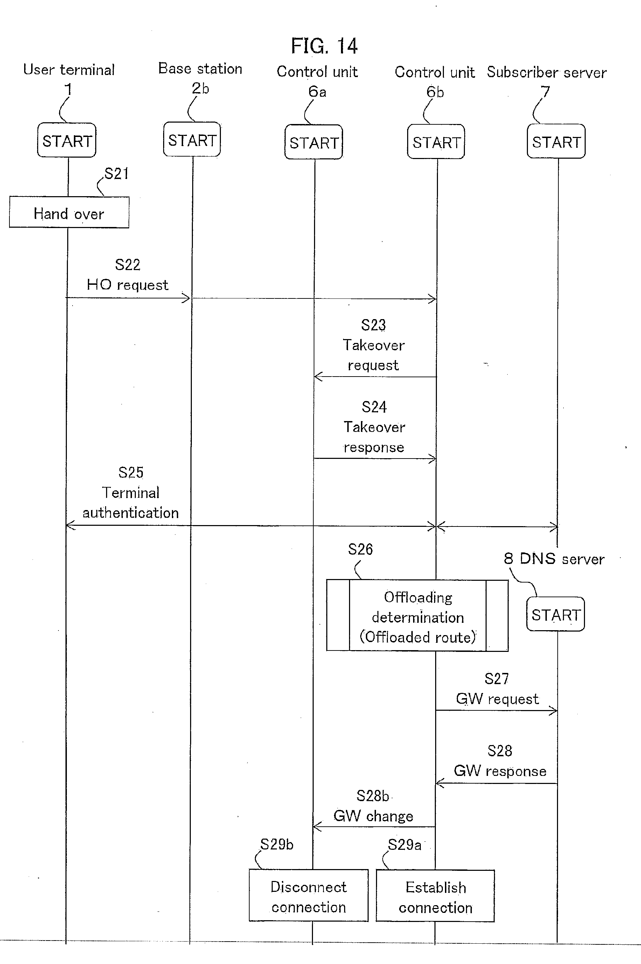

FIG. 14 is a flowchart showing a handover route determination process for offloading in FIGS. 13A and 13B. Hereinafter, the same steps in FIG. 12 and FIG. 14 have the same reference numerals, and a description will be given by focusing on differences between the two flowcharts.

S21 to S25 perform the same processing in both flow charts.

In S26 in FIG. 14, as a result of the offloading determination, offloading (select the offloaded route) is allowed.

In S28b, the control unit 6b transmits a message of not performing a GW reselection (newly selects a transfer unit which is different from the transfer unit that has been in connection before the handover), as a GW change (Serving GW change indication) to the control unit 6a.

In S29a, the control unit 6b implements a new connection establishment (Connection establishment) shown in FIG. 13B.

In S29b, the control device 6a disconnects the unnecessary connection shown in FIG. 13A.

In the present embodiment described as above, the offloading determination unit 53 in the control device 6 (6a, 6b) compares the request quality 51 and the delivery quality 52 to perform offloading determination to determine whether or not the traffic is redirected to an offloaded route. This disallows traffic, which has the request quality 51 higher than the delivery quality 52 and then the offloaded route cannot satisfy the request quality 51, to be redirected to the offloaded route, to provide a communication service to the user without any impact such as degradation of quality of service. Further, this allows traffic, which has the request quality 51 lower than the delivery quality 52 and then even the offloaded route can satisfy the request quality 51, to be redirected to the offloaded route, to reduce congestion in the wireless system.

Here, regarding a level of the communication quality (the request quality 51, the delivery quality 52), quality parameters such as "Delay" and "Loss rate" indicate the higher communication quality as the quality index value becomes smaller. On the other hand, quality parameters such as "Bandwidth" indicate the higher communication quality as the quality index value becomes larger.

Thus, sufficient communication quality is provided to allow both the user of the traffic flowing through the normal route and the user of the traffic flowing through the offloaded route to use the traffic service, and this can suppress all of the cost of customer service being increased due to the user complaining to the provider, business opportunities being lost due to the user switching the service contract to other provider, and the offering price of communication services being lowered.

Furthermore, even with various delivery quality 52, the delivery quality 52 can be identified from various data such as the network quality identification data 23, the estimated quality identification data 33, and the external quality identification data 43 to allow the offloading determination to be performed at a low cost and with high accuracy.

Note that the present invention is not limited to the embodiments described as above, and includes various modifications. For example, the above-described embodiments are described in detail in order to better illustrate the present invention and are not intended to be limited to include all the configurations described.

In addition, a part of the configuration of one embodiment may be replaced with the configuration of another embodiment, or the configuration of another embodiment may be added to the configuration of one embodiment.

Further, a part of the configuration of each embodiment may be deleted, or added / replaced with other configuration(s). Furthermore, each of the configurations, functions, processing units, processing means, and the like as described above may be implemented partially or entirely in hardware, such as by designing with (a) integrated circuit(s).

Moreover, each of the configurations and the functions as described above may be implemented in software, by a processor interpreting and executing a program to implement each function.

Information such as programs to implement respective functions, tables, and files may be stored in a memory, a recording device such as a hard disk and an SSD (Solid State Drive), or a recording medium such as an IC (Integrated Circuit) card, an SD card, and a DVD.

In addition, control lines and information lines are shown for those required for explanation, and all control lines and information lines are not shown for the products. In practice, almost all configurations may be considered to be connected to each other.

**REFERENCE SIGNS LIST**

| | |
|---|---|
| 1 | User terminal |
| 2, 2a, 2b | Base station |
| 3, 3a, 3b | User transfer unit |
| 4, 4a, 4b | External transfer unit |
| 5, 5a, 5b | Mobile network |
| 5y | Router |
| 5z | Peer terminal |
| 6, 6a, 6b | Control unit |
| 6z | Operation unit |
| 7 | Subscriber server |
| 8 | DNS server |
| 9a | Core network |
| 9b | Internet |
| 9c, 9d | Relay network |
| 11 | Request quality processing unit |
| 12 | Traffic quality data |
| 13 | Acceptable quality data |
| 21 | Network quality processing unit |
| 22 | Network association data |
| 23 | Network quality identification data |
| 31 | Estimated quality processing unit |
| 32 | Estimated quality association data |
| 33 | Estimated quality identification data |
| 41 | External quality processing unit |
| 42 | External quality association data |
| 43 | External quality identification data |
| 51 | Request quality |
| 52 | Delivery quality |
| 53 | Offloading determination unit |
| 61 | Normal route selection unit |
| 62 | Offloaded route selection unit |

**Claims**

1.   A control unit for use in a wireless system, comprising:

a storage means that, for traffic caused by a connection request for wireless communication, stores request quality which is quality of service of communication networks required for the traffic, and delivery quality which is quality of service delivered by each of the communication networks;

a quality-obtaining means that, for the traffic caused by the connection request, obtains the request quality associated with the traffic from the storage means, and, for each of the communication networks on a route through which the traffic caused by the connection request passes, obtains the delivery quality for said communication network from the storage means; and

a determining means that, when the delivery quality obtained satisfies the request quality obtained, allows a connection to each of the communication networks associated with the delivery quality obtained, and, when the delivery quality obtained does not satisfy the request quality obtained, disallows a connection to each of the communication networks associated with the delivery quality obtained.

2. The control unit for use in a wireless system, according to claim 1, further comprising

a route selecting means that,

when a connection to one of the communication networks is allowed by the determining means, newly establishes a connection passing through a base station which is identified from a unit ID included in the connection request, and the one of the communication networks which has been allowed for connection, and

when a connection to one of the communication networks is disallowed by the determining means, continues to select a connection passing through another one of the communication networks than the one of the communication networks which has been disallowed.

3. The control unit for use in a wireless system, according to claim 1 or 2, wherein the quality-obtaining means, as the request quality, obtains from the storage means maximum allowable values of quality of service, which have been set in advance for each traffic user.

4. The control unit for use in a wireless system, according to claim 1 or 2, wherein the quality-obtaining means accepts an input of a representative value of quality of service to be used in common to all the communication networks, and uses the representative value as the delivery quality.

5. The control unit for use in a wireless system, according to claim 1 or 2, wherein the quality-obtaining means accepts an input of values of quality of service for each of the communication networks, and, among the values of quality of service, uses as the delivery quality the values of quality of service for the communication networks to be determined by the determining means.

6. The control unit for use in a wireless system, according to claim 1 or 2, wherein the quality-obtaining means transmits a measurement request of quality of service for each of the communication networks to a transfer unit connecting to each of the communication networks to obtain actual measured data of quality of service for each of the communication networks, and, among the values of quality of service, uses as the delivery quality the values of quality of service for the communication networks to be determined by the determining means.

7. The control unit for use in a wireless system, according to claim 1 or 2, wherein the quality-obtaining means, with reference to association data stored in advance in the storage means between a word indicating estimated quality and values of quality of service associated with the word, uses as the delivery quality a value of quality of service associated with a word which is included in a character string of identification information of each of the communication networks and indicates the estimated quality.

8. The control unit for use in a wireless system, according to claim 1 or 2, wherein the quality-obtaining means, with reference to association data stored in advance in the storage means between identifiers, each indicating values of quality of service in each of the communication networks, obtains from an identifier indicating values of quality of service in each of the communication networks, through which traffic passes, among the communication networks, values of quality of service in each of the communication networks, which are determined in the determining means, among the communication networks, and then uses as the delivery quality the values of quality of service obtained.

9. A control method for use in a wireless system of communication networks flowing traffic of wireless communication, for determining a connection route which is a logical communication path for traffic passing through,

wherein a control unit of the wireless system includes a storage means that, for traffic caused by a connection request for the wireless communication, stores request quality which is quality of service of communication networks required for the traffic, and delivery quality which is quality of service delivered by each of the communication networks, and

the control method comprising:

obtaining, for the traffic caused by the connection request, the request quality associated with the traffic from the storage means, and, for each of the communication networks on a route through which the traffic caused by the connection request passes, obtaining the delivery quality for said communication network from the storage means; and

performing a determination that, when the delivery quality obtained satisfies the request quality obtained, allows a connection to each of the communication networks associated with the delivery quality obtained, and, when the delivery quality obtained does not satisfy the request quality obtained, disallows a connection to each of the communication networks associated with the delivery quality obtained.

10. The control method for use in a wireless system, according to claim 9, further comprising:

newly establishing, when a connection to one of the communication networks is allowed by performing the determination, a connection passing through a base station which is identified from a unit ID included in the connection request, and the one of the communication networks which has been allowed for connection, and continuously selecting, for traffic for which a connection to one of the communication networks is disallowed, a connection passing through another one of the communication networks than the one of the communication networks which has been disallowed.

## FIG. 1A

## FIG. 1B

## FIG. 2

```
Normal
route

          ┌──────────────┐      Offloaded        ┌──────────────┐
          │      1       │        route          │      7       │
          │ User terminal│                       │  Subscriber  │
          └──────────────┘                       │    server    │
                                                 └──────────────┘

          ┌──────────────┐                       ┌──────────────┐
          │     2a       │                       │      6       │
          │ Base station │───────────────────────│ Control unit │
          └──────────────┘                       └──────────────┘
                 9d
          Relay network

          ┌──────────────┐
          │     3a       │
          │User transfer │
          │    unit      │
          └──────────────┘

       Core network
          9a

          ┌──────────────┐                       ┌──────────────┐
          │     4a       │                       │     4b       │
          │  External    │                       │  External    │
          │transfer unit │                       │transfer unit │
          └──────────────┘                       └──────────────┘
                 9c
         Relay network

          ┌──────────────┐
          │     5y       │
          │   Router     │
          └──────────────┘
                                                  9b  Internet

          ┌──────────────┐
          │     5z       │
          │ Peer terminal│
          └──────────────┘

        5  Mobile network
```

## FIG. 3A

User terminal **1**  Base station **2**  User transfer Unit **3**  External transfer unit **4**  Peer terminal **5z**

Video conferencing traffic

9c  Relay network (high quality)

3GPP(high quality)

Mail traffic

9b  Internet (low quality)

## FIG. 3B

User terminal **1**  Base station **2**  User transfer Unit **3**  External transfer unit **4**  Peer terminal **5z**

Video conferencing traffic

9c  Relay network (high quality)

3GPP(high quality)

Mail traffic

9b  Internet (low quality)

## FIG. 4A

4　External transfer unit

## FIG. 4B

6　Control unit

# FIG. 5

6 Control unit

| 11 Request quality processing unit | 12 Traffic quality data | 13 Allowable quality data |
|---|---|---|

| 21 Network quality processing unit | 22 Network association data | 23 Network quality identification data |
|---|---|---|

| 31 Estimated quality processing unit | 32 Estimated quality association data | 33 Estimated quality identification data |
|---|---|---|

| 41 External quality processing unit | 42 External quality association data | 43 External quality identification data |
|---|---|---|

| 51 Request quality | 53 Offloading determination unit | 52 Delivery quality |
|---|---|---|

Disallow      Allow

| 61 Normal route selection unit | 62 Offloaded route selection unit |
|---|---|

## FIG. 6A

12 Traffic quality data

| QCI | GBR | Priority | Delay | Loss rate | Traffic service |
|-----|-----|----------|-------|-----------|-----------------|
| 1 | Yes | 2 | 100 | $10^{-2}$ | Conversational Voice |
| 2 | Yes | 4 | 150 | $10^{-3}$ | Conversational Video (Live Streaming) |
| 3 | Yes | 3 | 50 | $10^{-3}$ | Real Time Gaming |
| 4 | Yes | 5 | 300 | $10^{-6}$ | Non-Conversational Video (Buffered Streaming) |
| 5 | No | 1 | 100 | $10^{-6}$ | IMS Signalling |
| 6 | No | 6 | 300 | $10^{-6}$ | Video (Buffered Streaming), TCP-based (e.g., www, e-mail, chat, ftp, p2p file sharing, progressive video, etc.) |
| 7 | No | 7 | 100 | $10^{-3}$ | Voice, Video (Live Streaming), Interactive Gaming |
| 8 | No | 8 | 300 | $10^{-6}$ | Video (Buffered Streaming), TCP-based (e.g., www, e-mail, chat, ftp, p2p file sharing, progressive video, etc.) |
| 9 | No | 9 | 300 | $10^{-6}$ | Video (Buffered Streaming), TCP-based (e.g., www, e-mail, chat, ftp, p2p file sharing, progressive video, etc.) |

## FIG. 6B

13 Acceptable quality data

| QCI | Delay | Loss rate |
|-----|-------|-----------|
| 1 | 150 | $10^{-3}$ |
| 2 | 150 | $10^{-3}$ |
| 3 | 150 | $10^{-4}$ |
| ... | ... | ... |
| 9 | 350 | $10^{-6}$ |

## FIG. 7A

22 Network association data

| External transfer unit | Mobile network | A P N |
|---|---|---|
| 4 a | 5 a | APN1 |
| 4 a | 5 b | APN2 |
| 4 b | 5 a | APN3 |
| 4 b | 5 b | APN4 |

→

23 Network quality identification data

| External transfer unit | A P N | Delay | Loss rate |
|---|---|---|---|
| 4 a | APN1 | 43 | 10^-8 |
| 4 a | APN2 | 480 | 10^-3 |
| 4 a | APN3 | 143 | 10^-6 |
| 4 b | APN8 | 68 | 10^-6 |
| 4 b | APN1 | 350 | 10^-7 |

## FIG. 7B

32 Estimated quality association data

| I D | APN | Estimated quality |
|---|---|---|
| APN1 | voice.mnc012.mcc214.gprs | voice |
| APN2 | internet.mnc123.mcc456.gprs | internet |
| APN3 | voicestream.mnc210.mcc345.gprs | voicestream |
| APN4 | NetworkA.Operator3.com.mnc012.mcc345.gprs | Operator3&NetworkA |
| APN5 | NetworkB.Operator2.com.mnc001.mcc022.gprs | Operator2&NetworkB |

33 Estimated quality identification data

| Estimated quality | Delay | Loss rate |
|---|---|---|
| internet | 400 | 10^-3 |
| Operator2&NetworkB | 100 | 10^-3 |
| Operator3&NetworkA | 50 | 10^-8 |
| voice | 100 | 10^-6 |
| voicestream | 100 | 10^-6 |

## FIG. 7C

42 External quality association data

| QCI | External QCI |
|---|---|
| 1 | a |
| 2 | a |
| 3 | a |
| 4 | b |
| 5 | c |
| 6 | d |
| 7 | e |
| 8 | f |
| 9 | f |

→

43 External quality identification data

| External QCI | Delay | Loss rate |
|---|---|---|
| a | 80 | 10^-3 |
| b | 300 | 10^-6 |
| c | 100 | 10^-6 |
| d | 300 | 10^-8 |
| e | 100 | 10^-8 |
| f | 300 | 10^-8 |

# FIG. 8

Operation unit
6z

External transfer unit
4

Router
5y

Control unit
6

START          START          START          START

S201
Measurement request

S202
Measurement response

S203
Quality measurement

S204
Measurement
result request

S205
Measurement
result response

S206
Measurement report

S207
Measurement
report response

# FIG. 9

User terminal 1 | Base station 2 | Control unit 6 | Subscriber server 7 | DNS server 8

START | START | START | START | START

S11
Connection request

S12
Terminal authentication

S13
Update request

S14
Update response

S15
Offloading determination

S16
GW request

S17
GW response

S18
Establish connection

# FIG. 10

Offloading determination in S15, S26

```
                    START

                                        S101
                                          ╲
              ◇ Is offloading allowed ? ◇───── NO
                        │                         │
                       YES          S102          │
                        │             ╲           │
          ┌──────────────────────────────────┐   │
          │ Obtain request quality of traffic (user) │
          └──────────────────────────────────┘   │
                        │                         │
                                    S103          │
                        │             ╲           │
          ┌──────────────────────────────────┐   │
          │   Obtain delivery quality of network │
          └──────────────────────────────────┘   │
                        │                         │
                                    S104          │
                        │             ╲           │
    YES  ◇ Does delivery quality           ◇ NO  │
       ──◇ satisfy request quality ?  ◇──────────┤
      │                                           │
 S105 │                              S106         │
   ╲  │                                ╲          │
┌──────────────┐                  ┌──────────────┐
│ Offloaded route is │            │  Normal route is  │
│  to be selected    │            │  to be selected   │
│(Offloading allowed)│            │(Offloading disallowed)│
└──────────────┘                  └──────────────┘
          │                               │
          └────────────► END ◄────────────┘
```

23

## FIG. 11A

Normal route

1
User terminal

2a
Base station

2b
Base station

3a
User transfer unit

3b
User transfer unit

4a
External transfer unit

4b
External transfer unit

5 Mobile network

## FIG. 11B

1
User terminal

2a
Base station

Normal route

2b
Base station

3a
User transfer unit

3b
User transfer unit

4a
External transfer unit

4b
External transfer unit

5 Mobile network

## FIG. 12

User terminal
1

Base station
2b

Control unit
6a

Control unit
6b

Subscriber server
7

START   START   START   START   START

S21
Hand over

S22
HO request

S23
Takeover
request

S24
Takeover
response

S25
Terminal
authentication

S26
Offloading
determination
(Normal route)

8 DNS server
START

S27
GW request

S28
GW response

S29
GW reselection

## FIG. 13A

```
                        ┌─────────────────┐
                        │        1        │
                        │  User terminal  │
                        └─────────────────┘
┌─────────────────┐                              ┌─────────────────┐
│       2a        │       Offloaded route        │       2b        │
│  Base station   │                              │  Base station   │
└─────────────────┘                              └─────────────────┘

┌─────────────────┐                              ┌─────────────────┐
│       3a        │                              │       3b        │
│ User transfer   │                              │ User transfer   │
│     unit        │                              │     unit        │
└─────────────────┘                              └─────────────────┘

┌─────────────────┐                              ┌─────────────────┐
│       4a        │          ⊗                   │       4b        │
│   External      │                              │   External      │
│ transfer unit   │                              │ transfer unit   │
└─────────────────┘                              └─────────────────┘

                   5  Mobile network
```

## FIG. 13B

```
                 ┌─────────────────┐
                 │        1        │
                 │  User terminal  │
                 └─────────────────┘
┌─────────────────┐                              ┌─────────────────┐
│       2a        │    Offloaded route           │       2b        │
│  Base station   │                              │  Base station   │
└─────────────────┘                              └─────────────────┘

┌─────────────────┐                              ┌─────────────────┐
│       3a        │                              │       3b        │
│ User transfer   │                              │ User transfer   │
│     unit        │                              │     unit        │
└─────────────────┘                              └─────────────────┘

┌─────────────────┐                              ┌─────────────────┐
│       4a        │          ⊗                   │       4b        │
│   External      │                              │   External      │
│ transfer unit   │                              │ transfer unit   │
└─────────────────┘                              └─────────────────┘

                 5  Mobile network
```

## FIG. 14

| User terminal 1 | Base station 2b | Control unit 6a | Control unit 6b | Subscriber server 7 |
|---|---|---|---|---|
| START | START | START | START | START |

S21
Hand over

S22
HO request →

S23
Takeover request ←

S24
Takeover response →

S25
Terminal authentication ←

S26

Offloading determination (Offloaded route)

8 DNS server
START

S27
GW request →

S28
GW response ←

S28b
GW change ←

S29b
Disconnect connection

S29a
Establish connection

**INTERNATIONAL SEARCH REPORT**

| | International application No. |
|---|---|
| | PCT/JP2013/053235 |

A.  CLASSIFICATION OF SUBJECT MATTER
*H04W76/02* (2009.01) i

According to International Patent Classification (IPC) or to both national classification and IPC

B.  FIELDS SEARCHED

Minimum documentation searched (classification system followed by classification symbols)
H04W76/02

Documentation searched other than minimum documentation to the extent that such documents are included in the fields searched
Jitsuyo Shinan Koho          1922–1996   Jitsuyo Shinan Toroku Koho   1996–2013
Kokai Jitsuyo Shinan Koho    1971–2013   Toroku Jitsuyo Shinan Koho   1994–2013

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | WO 2012/035697 A1  (Panasonic Corp.),<br>22 March 2012 (22.03.2012),<br>paragraphs [0036] to [0046]; fig. 10 to 17<br>(Family: none) | 1–10 |
| Y | JP 2011-160242 A  (NEC Corp.),<br>18 August 2011 (18.08.2011),<br>paragraphs [0036] to [0054]<br>(Family: none) | 1–10 |
| Y | JP 2004-536535 A  (Siemens AG.),<br>02 December 2004 (02.12.2004),<br>paragraphs [0010] to [0012]<br>& US 2004/0240414 A1      & EP 1405540 A<br>& WO 2003/009624 A1      & BR 000117075 A<br>& CN 001555662 A          & MX 2004000263 A | 2,10 |

☐  Further documents are listed in the continuation of Box C.      ☐  See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 04 March, 2013 (04.03.13) | 12 March, 2013 (12.03.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012107727 A

### Non-patent literature cited in the description

- TS 23.401 V10.5.0. *3GPP,* 27 September 2011, http://www.3gpp.org/ftp/Specs/archive/23_series/23.401/23401 -a50.zip>
- Table 6.1.7: Standardized QCI characteristics. *3GPP TS 23.203*

- 3GPP TS 23.203 V11.5.0. *3GPP TS 23.203 V11.5.0,* 05 April 2012, http://www.3gpp.org/ftp/Specs/archive/23_series/23.203/23203-b50.zip>